# EUROPEAN PATENT APPLICATION

(11) **EP 0 634 265 A1**
(43) Date of publication of application: **18.01.1995**
(21) Application number: 94304502.1
(22) Date of filing: 21.06.1994
(51) Int. Cl.: B29C 51/14

(54) **Thermoforming process**

(30) Priority: 14.07.1993 US 91385
(71) Applicant: GENERAL ELECTRIC COMPANY, Schenectady, NY 12345 (US)
(72) Inventor: Parekh, Shashi Laxmidas, Mendham, New Jersey 07945 (US); Teutsch, Erich Otto, Richmond, Massachusetts 01254 (US); Shenian, Popkin L., Pittsfield, Massachusetts 01201 (US)
(74) Representative: Pratt, Richard Wilson

(57) **Abstract**

A process for thermoforming lofted reinforced composites is provided. The process involves (a) creating a sealed preform by applying a thermoplastic film (22) to a lofted, porous, air permeable, fiber reinforced thermoplastic web (20) containing thermoplastic particulates; (b) heating the sealed preform (24) to a temperature above the melt temperature of the thermoplastic particulates of the web (20); (c) vacuum and/or air pressure forming the heated preform to produce a formed article (26). The process provides-for the vacuum and/or air pressure forming of otherwise porous composite materials. The process may be used for making shaped articles which may be suitable as sinks, bathtubs or automotive panels.

## Description

### BACKGROUND OF THE INVENTION

### Field of the Invention

The present invention relates to processes for the thermoforming of thermoplastic webs, and more particularly relates to the thermoforming of air permeable fiber reinforced thermoplastic webs.

### Description of Related Art

Air permeable sheet-like structures (web composites) comprising (a) 20% to 60% by weight of reinforcing fibers having a high modulus of elasticity, and being between about 7 and about 50 millimeters long, and (b) 40% to 80% by weight of wholly or substantially unconsolidated particulate plastics material are set forth in published European Patent Applications 0,148,760 and 0,148,761 which are incorporated herein by reference. Such sheet-like structures are made from air permeable lofted webs of reinforcing fibers and plastic particulates.

Vacuum and/or air pressure forming such porous webs can be difficult due to their air permeability. The air permeable nature of the webs allows air to be drawn through them, breaking vacuum, and preventing a sufficiently substantial pressure differential across the web necessary for thermoforming thereof.

Accordingly, one object of the present invention is to provide a process for vacuum and/or air pressure thermoforming air permeable webs of elastic fibers and thermoplastic particulates.

### SUMMARY OF THE INVENTION

The present invention involves an air pressure differential thermoforming process for air permeable webs of reinforcing fibers and thermoplastic particulates. The process involves (i) applying a thermoplastic cap film to an air permeable composite web of reinforcing fiber and thermoplastic particulates resulting in a capped preform; (ii) heating the preform to a temperature above the melt temperature of the thermoplastic resin of the web; and (iii) vacuum and/or air pressure forming the heated preform to produce a shaped article.

### BRIEF DESCRIPTION OF THE DRAWINGS

Figure 1 is a side elevational view of a web;
Figure 2 is a top plan view of the web of Figure 1;
Figure 3 is a side elevational view of a film;
Figure 4 is a top plan view of the film of Figure 3;
Figure 5 is a side elevational view of a film capped web preform;
Figure 6 is a schematic vertical cross-sectional view of a vacuum forming apparatus with the capped web preform;
Figure 7 is a schematic vertical cross-sectional view of the apparatus of Figure 6 having the vacuum formed article;
Figure 8 is a schematic vertical cross-sectional view of a vacuum/pressure forming apparatus;
Figure 9 is a top plan view of the bottom mold half;
Figure 10 is a bottom plan view of the top mold half;
Figure 11 is a schematic vertical cross-sectional view of the apparatus of Figure 8 with the formed article therein;
Figure 12 is a vertical cross-sectional view of the formed article;
Figure 13 is a top plan view of the formed article.

### DETAILED DESCRIPTION OF THE INVENTION

The present invention provides a process for the manufacture of a fiber reinforced, thermoformed, shaped composite article from an air permeable web.

The air permeable web is a web with 20% to 60% by weight of single fibers based on the total weight of the web, the fibers having a high modulus of elasticity and being between 7 and 50 millimeters long, and 40% to 60% by weight of a wholly or substantially unconsolidated particulate plastics material based on the total weight of the web. The web may be treated if desired, for example by heating and cooling, to bond the fibers and plastics together.

Preferably, the web is formed by the process described in UK Patent Nos. 1,129,757 and 1,329,409, which are incorporated herein by reference, which relate to methods of producing fibrous sheets on papermaking machinery. This process achieves a very uniform distribution of single fibers in the sheet, even when the fibers are much longer than can be handled in conventional papermaking machinery.

However, other web forming techniques may be used in certain circumstances. Thus, for example, such a web may be formed by using a very low consistency dispersion of fibers and plastics powder, together with a binder, and forming the structure of a paper machine with an "uphill wire".

The web of fibers and plastics powder may also be formed using a dry laying technique as described in UK Patent No. 1,424,682. In this case, a binder may be applied by means of a spray or by dipping and draining the web after it has been formed.

After the web has been formed it may be treated, usually by heating, to effect bonding the plastics particles held in the web either with or without consolidation of the web. Slight nip metering may be effected to ensure that the structure produced has a constant thickness.

The resultant web is air permeable such that vacuum and/or air pressure thermoforming of the web by itself is not feasible because it would be too difficult to create a sufficient air pressure differential on opposite sides of the web. Also since the web is air permeable any cool air flowing through the web would rapidly cool the resin of the web to below its thermoforming temperature.

Suitable thermoplastic resins for the particulates of the web include polyesters, polycarbonates, polyarylene ether sulfones or ketones, polyamides, polyamide imides, polyphenylene ether, polyetherimides, acrylonitrile butadiene styrene copolymers, polyolefins and polyvinyls.

### (a) POLYESTERS

Suitable thermoplastic polyesters for the present invention are derived from one or more aliphatic and/or cycloaliphatic glycols and one or more aromatic dicarboxylic acids. The glycol may be selected from the group consisting essentially of ethylene glycol; 2 methyl-1,3 propanediol; 1,4-butanediol; 1,5-pentanediol; 1,6-hexanediol and 1,4-cyclohexanedimethanol, and the like. Suitable dicarboxylic acids include terephthalic acid, phthalic acid, isophthalic acid and naphthalene 2,6-dicarboxylic acid. The polyesters of the present invention may also contain minor amounts of other units such as aliphatic dicarboxylic acids and/or aliphatic polyols to form copolyesters.

Generally, the polyesters of the present invention may be represented by the formula: 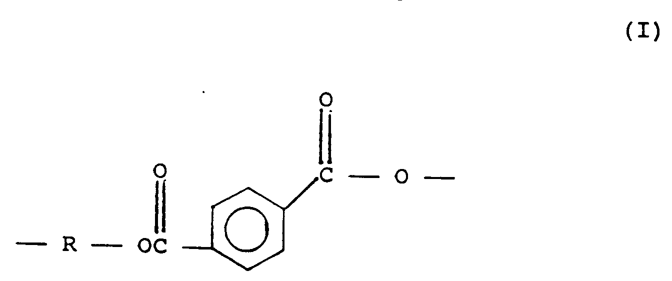
wherein R represents the divalent radical remaining after removal of the hydroxy groups from the glycol. Preferred polyesters include poly(ethylene terephthalate), poly(butylene terephthalate) and blends thereof.

The polyesters described herein are either commercially available or can be produced by methods well known in the art, such as those set forth in U.S. Patent Nos. 2,465,319; 3,047,539 and 2,910,466, herein incorporated by reference. Further, the polyesters used herein have an intrinsic viscosity of from about 0.4 to about 2.0 dl/g as measured in 60:40 phenol/tetrachloroethane mixture or a similar solvent at 30°C.

### (b) POLYCARBONATES

Any of the thermoplastic polycarbonates known in the art may be used in accordance with the present invention. Especially preferred polycarbonates are the aromatic polycarbonates. Aromatic polycarbonates useful herein are homopolymers, copolymers and mixtures thereof, which have an intrinsic viscosity of from about 0.3 to about 1.0 dl/g as measured in methylene chloride at 25°C.

Generally, the aromatic polycarbonates are prepared by reacting a dihydric phenol with a carbonate precursor such as phosgene, a haloformate or a carbonate ester. Typical of the dihydric phenols that may be employed are 2,2-bis(4-hydroxyphenyl)propane; bis(4-hydroxyphenyl)methane; 2,2-bis(4-hydroxy-3-methylphenyl)propane; (3,3'-dichloro-4,4'-dihyroxy diphenyl)methane and the like. The aromatic polycarbonates may be formed in accordance with the methods set forth in U.S. Patent Nos. 2,999,835; 3,028,365; 2,999,844; 4,018,750 and 4,123,435, all incorporated herein by reference, as well as other processes known to those skilled in the art.

The polycarbonates so produced are typified as possessing recurring structural units of the formula: 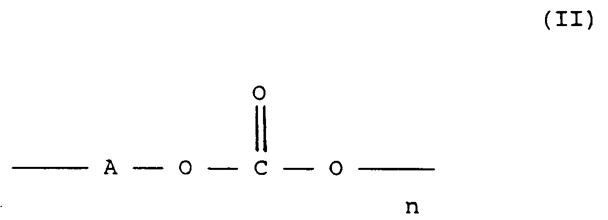
wherein A is a divalent aromatic radical of the dihydric phenol employed in the polymer producing reaction and n is greater than one, preferably from about 10 to about 400.

It is of course possible to employ two or more different dihydric phenols or a dihydric phenol in combination with a glycol, a hydroxy or acid terminated polyester, or a dibasic acid in the event a carbonate copolymer or copolyester carbonate rather than a homopolymer polycarbonate is desired for use in the practice of the invention. Thus, it should be understood that the term "polycarbonate resin" embraces within its scope carbonate co-polymers.

Suitable copolymers also include those polycarbonate copolymers which comprise units derived from a first dihydric phenol which is bis(hydroxyaryl)sulfone and a second dihydric phenol such as 2,2-bis(4-hydroxyphenyl)propane as disclosed in U.S. Patent Nos. 3,737,409; and 2,999,846.

### (c) POLYARYLENE ETHER SULFONES OR KETONES

Thermoplastic poly(arylether) resin components suitable for use herein are linear, polyarylene polyether polysulfones, wherein the arylene units are interspersed with ether and sulfone linkage. These resins may be obtained by the reaction of an alkali metal double salt of a dihydric phenol with a dihalobenzenoid compound, either or both of which contain a sulfone or ketone linkage, i.e., -SO₂₂- or -CO- between arylene groupings, to provide sulfone or ketone units in the polymer chain in addition to arylene units and ether units. The polysulfone polymer has basic structure comprising recurring units of the formula:

- O - E - O - E' - (III)

wherein E is the residuum of the dihydric phenol and E' is the residuum of the benzenoid compound having an inert electron withdrawing group in at least one of the positions ortho and para to the valence bonds; both of said residua are valently bonded to the ether oxygens through aromatic carbon atoms. Such polysulfones are included within the class of polyarylene polyether resin described in, for example, U.S. Patent Nos. 3,264,536 and 4,108,837, herein incorporated by reference.

The residuum of the dihydric phenol, E, is derived from dinuclear phenols having the structure: 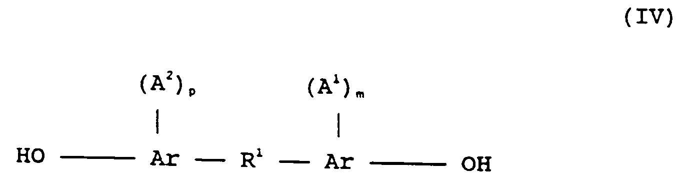
wherein Ar is an aromatic group and preferably is a phenylene group, A² and A¹ may be the same or different inert substituent groups, such as alkyl groups having from 1 to 4 carbon atoms halogen atoms or alkoxy radicals having from 1 to 4 carbon atoms, p and m are integers having a value of 0 to 4, inclusive, and R¹ is representative of a bond between aromatic carbon atoms as in dihydroxydiphenyl, or is a divalent radical including, for example, CO, O, S, S-S, SO₂ or a divalent organic hydrocarbon radical, such as alkylene, alkylidene, cycloalkylene, cycloalkylidene or the halogen, alkyl, or aryl or like substituted alkylene, cycloalkylene and cycloalkylidene radicals.

The polyarylene ether sulfones or ketones have a reduced viscosity of from about 0.4 to about 1.5 dl/g as measured in an appropriate solvent at an appropriate temperature depending on the particular polyether, such as methylenechloride at 25°C. The preferred polyarylene ether sulfones or ketones have repeating units of the formula:

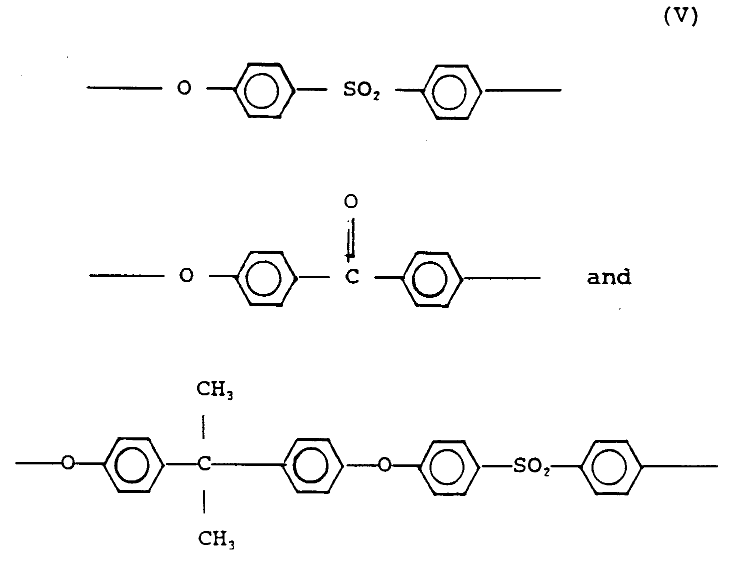

### (d) POLYAMIDES

Thermoplastic polyamides suitable for the present invention may be obtained by polymerizing a monoaminomono- carboxylic acid or a lactam thereof having at least 2 carbon atoms between the amino and carboxylic acid group; or by polymerizing substantially equimolar proportions of a diamine which contains at least 2 carbon atoms between the amino groups and a dicarboxylic acid; or by polymerizing a monoaminocarboxylic acid or a lactam thereof as defined above together with substantially equimolecular proportions of a diamine and a dicarboxylic acid. The dicarboxylic acid may be used in the form of a functional derivative thereof, for example an ester.

The term "substantially equimolecular" proportions (of the diamine and of the dicarboxylic acid) is used to cover both strict equimolecular proportions and slight departures therefrom which are involved in conventional techniques for stabilizing the viscosity of the resultant polyamides.

Examples of the aforementioned monoaminomonocarboxylic acids or lactams thereof which are useful in preparing the polyamides include those compounds containing from 2 to 16 carbon atoms between the amino and carboxylic acid groups, said carbon atoms forming a ring with the -CO-NH- group in the case of a lactam. As particular examples of aminocarboxylic acids and lactams there may be mentioned -aminocaproic acid, butyrolactam, pivalolactam, caprolactam, capryllactam, enantholactam, undecanolactam, dodecanolactam and 3- and 4-aminobenzoic acids.

Examples of diamines suitable for preparing the polyamides include diamines of the general formula:

H₂N(CH₂)_{q}NH₂ (VI)

wherein q is an integer of from 2 to 16, such as trimethylenediamine, tetramethylenediamine, pentamethylenediamine, octamethylenediamine and especially hexamethylenediamine.

The dicarboxylic acids may be aromatic, for example isophthalic and terephthalic acids. Preferred dicarboxylic acids are of the formula:

HOOC-Y-COOH (VII)

wherein Y represents divalent aliphatic radical containing at least 2 carbon atoms, and examples of such acids are sebacic acid, octadecanedoic acid, suberic acid, glutaric acid, pimelic acid and adipic acid.

Preferred polyamides or nylons, as they are often called, include nylon 6, 6/6, 11, 12, 6/3, 6/4 and 6/12. The number average molecular weights of the polyamides useful in the invention are generally above about 10,000.

### (e) POLYAMIDE-IMIDES

The thermoplastic polyamide-imide copolymers useful for the present invention generally have a crystalline structure and a melting point of over about 340°C. They are prepared by the reaction of dianhydrides with diamines containing preformed amide groups resulting in an amide-imide structure as follows:

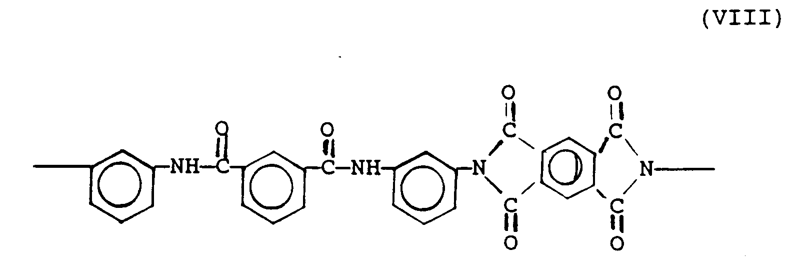

Other copolymers can be prepared by the reaction of trimelletic anhydride acid chloride with aromatic diamines. These copolymers can be prepared by the methods disclosed in Supplement Volume, Kirk-Othmer Encyclopedia of Chemical Technology, pages 746-773 (1971).

### (f) POLYPHENYLENE ETHER

The polyphenylene ether resins useful for the present invention comprise homopolymers and copolymers of structural units of the formula: 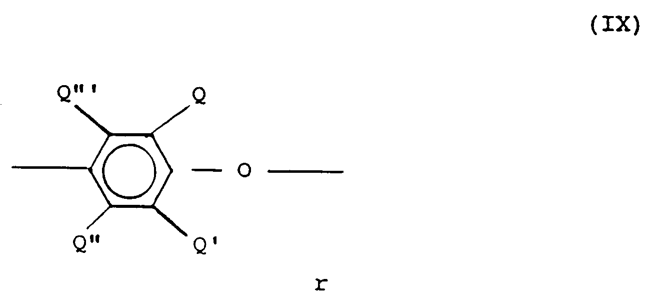
wherein Q, Q', Q'' and Q''' are independently selected from the group consisting of hydrogen, hydrocarbon radicals, halohydrocarbon radicals having at least 2 carbon atoms between the halogen atom and the phenyl nucleus, hydrocarbonoxy radicals and halohydrocarbonoxy radicals having at least 2 carbon atoms between the halogen atom and phenyl nucleus, and Q', Q'' and Q''' in addition may be halogen with the proviso that Q and Q' are both free of a tertiary carbon atom; and r represents the total number of monomer residues and is an integer of at least 50.

The preferred polyphenylene ether resin is a poly(2,6-dimethyl-1,4-phenylene)ether resin having an intrinsic viscosity of from about 0.3 dl/g to about 0.60 dl/g in chloroform. The polyphenylene ether resins useful herein are well known in the art and may be prepared from a number of catalytic and non-catalytic processes from corresponding phenols or reactive derivates thereof. Examples of polyphenylene ethers and methods for their production are disclosed in U.S. Patent Nos. 3,306,874; 3,306,875; 3,257,357 and 3,257,358. All incorporated herein by reference.

### (g) POLYETHERIMIDES

Polyetherimides useful for the present invention may be prepared from the reaction between substantially equimolar amounts of aromatic bis(ether anhydride)s of the formula: 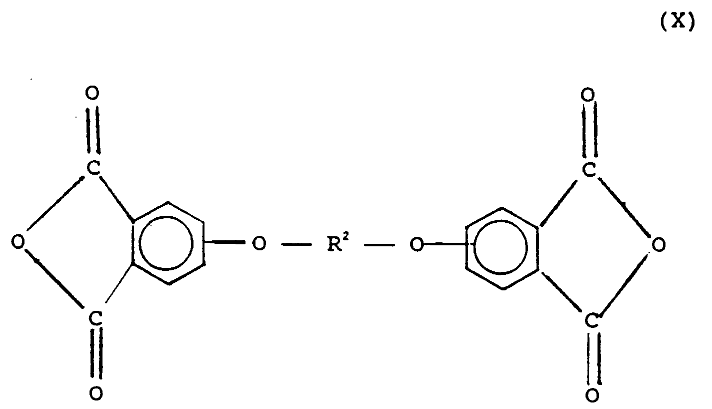
and organic diamine of the formula:

H₂NR'NH₂ (XI)

the reaction may take place in the presence or absence of a solvent and/or catalytic agent or compound, as known in the art.

As shown in formula X, R² is a member selected form the class consisting of (a) the following divalent organic radicals: 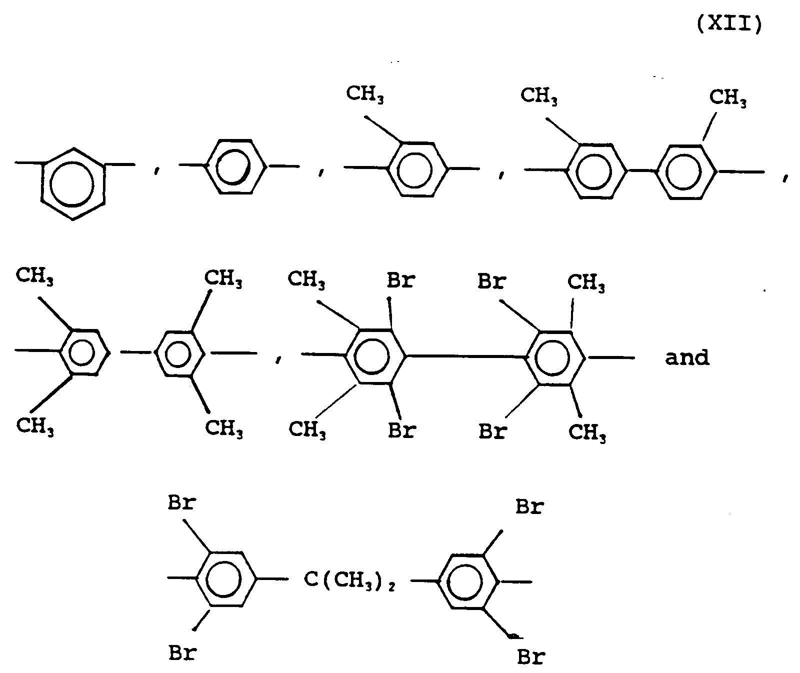
and (b) divalent organic radicals of the general formula: 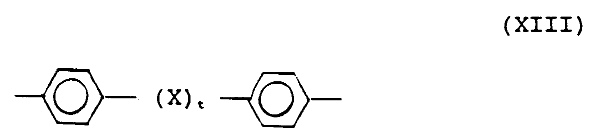
where X is a member selected from the class consisting of divalent radicals of the formula: 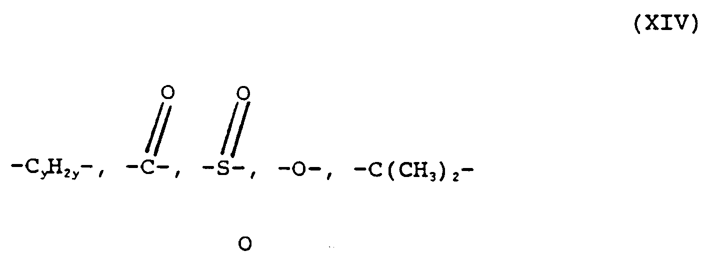
and -S-, t is 0 or 1, and y is a whole number from 1 to 5. R' as shown in Formula XI is a divalent organic radical selected from the class consisting of (a) aromatic hydrocarbon radicals having from 6-20 carbon atoms and halogenated derivates thereof, (b) alkylene radicals, C₍₂₋₈₎ alkylene terminated polydiorganosiloxane, cycloalkylene radicals having from 2-20 carbon atoms and (c) divalent radicals included by the formula: 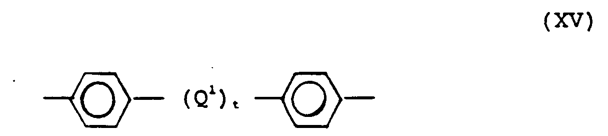
where Q¹ is a member selected from the class consisting of -O-, 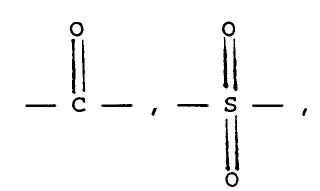
-S-, -CₓH₂ₓ- and -C(CH₃)₂- and x is a whole number from 1 to 5 inclusive, and t is as previously defined. These polyetherimides are prepared by methods well known in the art such as those described in, for example, U.S. Patent Nos. 3,917,643; 3,852,242; 3,855,176; 3,833,546; 3,875,116; 3,838,097; 3,905,942; and 3,933,749, all incorporated herein by reference.

### (h) ACRYLONITRILE BUTADIENE STYRENE COPOLYMERS

In general, thermoplastic ABS type polymers contain two or more polymeric parts of different compositions which are bonded chemically. The polymer is preferably prepared by polymerizing a conjugated diene, such as butadiene or a conjugated diene with a monomer copolymerizable therewith, such as styrene, to provide a polymeric backbone. After formation of the backbone, at least one grafting monomer, and preferably two, are polymerized in the presence of the prepolymerized backbone to obtain the graft copolymer. These resins are prepared by methods well known in the art.

The backbone polymer, as mentioned, is preferably a conjugated diene polymer such as polybutadiene, polyisoprene, or a copolymer, such as butadiene-styrene, butadiene-acrylonitrile, or the like.

The specific conjugated diene monomers normally utilized in preparing the backbone of the graft polymer are generically described by the following formula: 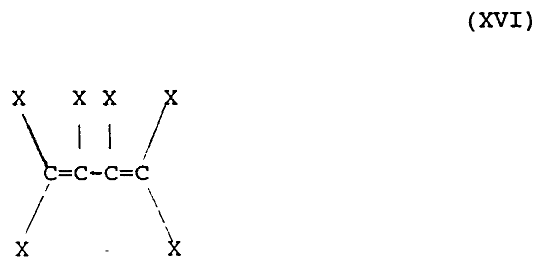
wherein X is selected from the group consisting of hydrogen, alkyl groups containing from one to five carbon atoms, chlorine or bromine. Examples of dienes that may be used are butadiene, isoprene, 1,3-hepta-diene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, debromobutadiene, mixtures thereof, and the like. A preferred conjugated diene is butadiene.

One monomer or group of monomers that may be polymerized in the presence of the prepolymerized backbone are monovinylaromatic hydrocarbons. The monovinylaromatic monomers utilized are generically described by the following formula: 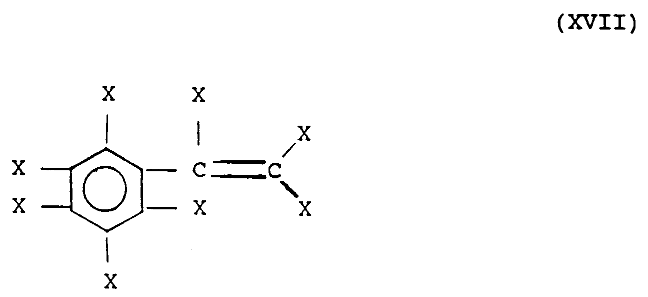
wherein X is as previously defined. Examples of the monovinylaromatic compounds and alkyl-, cycloalkyl-, aryl-, alkaryl-, aralkyl-, alkoxy-, aryloxy-, and other substituted vinylaromatic compounds include styrene, 3-methylstyrene; 3,5-diethylstyrene, 4-n-propylstyrene, α-methylstyrene, α-methyl vinyltoluene, α-chlorostyrene, -bromostyrene, dichlorostyrene, dibromostyrene, tetra-chlorostyrene, mixtures thereof, and the like. The preferred monovinylaromatic hydrocarbons used are styrene and/or α-methylstyrene.

A second group of monomers that may be polymerized in the presence of the prepolymerized backbone are acrylic monomers such as acrylonitrile, substituted acrylonitrile and/or acrylic acid esters, exemplified by acrylonitrile, and alkyl acrylates such as methyl methacrylate.

The acrylonitrile, substituted acrylonitrile, or acrylic acid esters are described generically by the following formula: 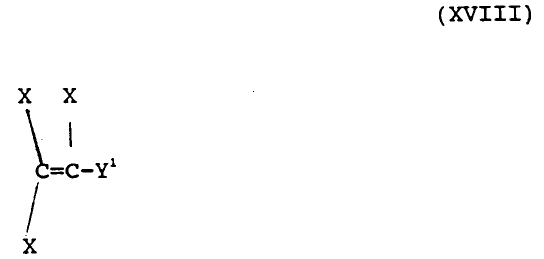
wherein X is as previously defined and Y¹ is selected from the group consisting of cyano and carbalkoxy wherein the alkoxy group of the carbalkoxy contains from one to about twelve carbon atoms. Examples of such monomers include acrylonitrile, ethacrylonitrile, methacrylonitrile, α-chloroacrylonitrile, β-chloroacrylonitrile, β-bromoacrylonitrile, and α-bromoacrylonitrile, methyl acrylate, methyl methacrylate, ethyl acrylate, butyl acrylate, propyl acrylate, isopropyl acrylate, and mixtures thereof. The preferred acrylic monomer is acrylonitrile and the preferred acrylic acid esters are ethyl acrylate and methyl methacrylate.

In the preparation of the graft polymer, the conjugated diolefin polymer or copolymer exemplified by a 1,3-butadiene polymer or copolymer comprises about 1,3-butadiene polymer or copolymer comprises about 50% by weight of the total graft polymer composition. The monomers polymerized in the presence of the backbone, exemplified by styrene and acrylonitrile, comprise from about 40% to about 95% by weight of the total graft polymer composition.

The second group of grafting monomers, exemplified by acrylonitrile, ethyl acrylate or methyl methacrylate, of the graft polymer composition, preferably comprise from about 10% to about 40% by weight of the total graft copolymer composition. The monovinylaromatic hydrocarbon exemplified by styrene comprise from about 30% to about 70% by weight of the total graft polymer composition.

In preparing the polymer, it is normal to have a certain percentage of the polymerizing monomers that are grafted on the backbone combine with each other and occur as free copolymer. If styrene is utilized as one of the grafting monomers and acrylonitrile as the second grafting monomer, a certain portion of the composition will copolymerize as free styrene-acrylonitrile copolymer. In the case where α-methylstyrene (or other monomer) is substituted for the styrene in the composition used in preparing the graft polymer, a certain percentage of the composition may be an -methylstyrene-acrylonitrile copolymer. Also, there are occasions where a copolymer, such as -methylstyrene-acrylonitrile, is added to the graft polymer copolymer blend. When the graft as polymer-copolymer blend is referred to herein, it is meant optionally to include at least one copolymer blended with the graft polymer composition and which may contain up to 90% of free copolymer.

Optionally, the elastomeric backbone may be an acrylate rubber, such as one based on n-butyl acrylate, ethylacrylate, 2-ethylhexylacrylate, and the like. Additionally, minor amounts of a diene may be copolymerized in the acrylate rubber backbone to yield improved grafting with the matrix polymer.

Polyolefins are well known thermoplastic polymers derived from aliphatically unsaturated monomers including ethylene, propylene, butylene, pentene, etc. Polyolefins include polyethylene, polypropylene, polybutylene, poly(2-methylpentene), polyvinylchloride, etc.

Aromatic polyvinyls are well known thermoplastics including polystyrene, etc.

All of these resins are well known in the art and many are commercially available.

Particulate plastics material is to be taken as including short thermoplastic plastics fibers which may be included to enhance the cohesion of the structure during manufacture.

Preferably, the reinforcing fibers are in the form of single discrete fibers. Thus, where glass fibers are used, and are received in the form of chopped strand bundles, the bundles are broken down into single fibers before the structure is formed. The fibers are not in a woven form.

A high modulus of elasticity is to be taken as meaning a modulus of elasticity substantially higher than that of a consolidated sheet which could be formed from the structure. Fibers falling into this category include glass, carbon and ceramic fibers and fibers such as the aramid fibers sold under the trade names Kevlar and Nomex and will generally include any fiber having a modulus higher than 10,000 Mega Pascals.

The use of larger thermoplastic particles results in a significant reduction in the flexural modulus of the material when consolidated. Preferably the plastics particles are not more than 1 millimeter in size.

The sealing cap film may be made of any of the above thermoplastic materials provided that the film is of a sufficiently thin thickness to provide adequate conformability during thermoforming to conform to the mold shape or melt at thermoforming temperatures such that the melted film conforms to the mold shape. The film should be of a material which will permanently adhere to the thermoplastic particulates of the web upon thermoforming. Adherence can be achieved by melting of the particulates and direct contact of the melted thermoplastic particulates with the thermoplastic film. Preferably the film has an average thickness of from 1 mil to 30 mils, more preferably from 5 mils to 15 mils, and most preferably about 10 mils.

The air permeable lofted web may be made by any of the above processes for admixing the fibers and thermoplastic particulates. The air permeable web preferably has a thickness of from 0.125 inch to 2.0 inch, more preferably from 0.25 inch to 1.0 inch, and most preferably about 0.5 inch. The web may be flexible or rigid at 25°C. Rigid air permeable rigid webs can be made by heating a flexible web to a temperature above the melt temperature of the thermoplastic resin particulates without compression and then allowing the resin to cool and bond to the fibers thereby resulting in an air permeable rigid web.

### DETAILED DESCRIPTION OF THE DRAWINGS

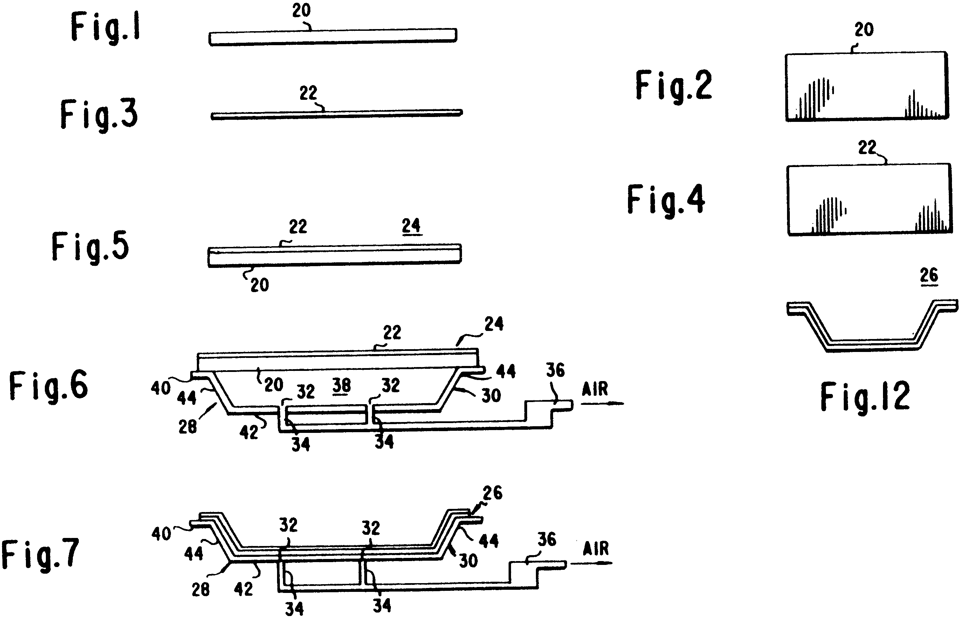

The web 20 is preferably an air permeable sheet-like fiber reinforced thermoplastic structure as illustrated in Figures 1 and 2. The air permeable web 20 typically has an air permeability of greater than 0.5 l/m² atm sec. The sealing thermoplastic film 22 is preferably a thin flat film 22 as represented in Figures 3 and 4. The film 22 is overlaid onto the web 20 in a contacting planar parallel relationship thereto resulting in a capped sealed web preform 24 as illustrated in Figure 5. The film 22 preferably has an air permeability of less than 0.02 l/m² atm sec. such that a substantial pressure differential can be created across opposite sides of the preform 24. The preform 24 can be-made by applying the film 22 to the web 20 in any number of ways including continuous layup process or individual layup of the film 22 over the web 20.

In order to be vacuum formed into a desired shaped final article 26, the preform 24 must be heated to a temperature above the melt temperature of the thermoplastic particulates of the web 20 of the preform 24. Heating of the preform 24 may be achieved in any of the suitably conventional ways, including conventional infrared heating and convection heating of the preform 24. The heated preform 24 can then be vacuum and/or air pressure thermoformed.

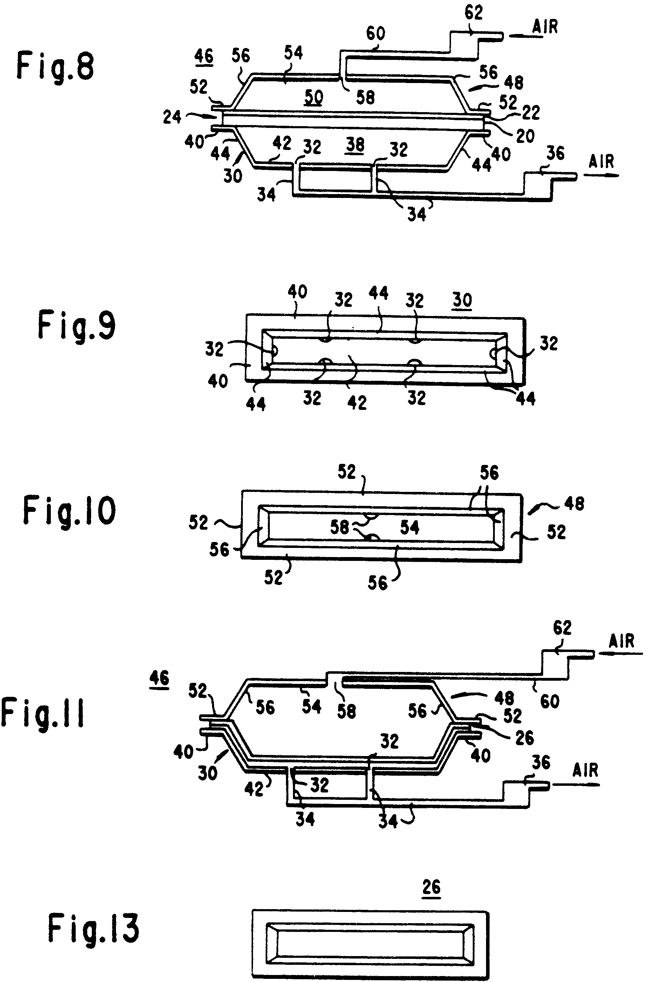

Figure 6 illustrates a vacuum forming apparatus 28 having the heated preform 24 thereon. The vacuum forming apparatus 28 includes an upwardly concave bottom mold 30 having vacuum vent holes 32 in communication with vacuum tubes 34 in communication with a vacuum pump 36. The vacuum pump 36 draws air from a vacuum chamber 38 formed between the preform 24 and bottom mold 30 through the vent holes 32, through the tubes 34 and forces the air out into the atmosphere thereby creating a pressure differential between the atmospheric side of the preform 24 and the chamber 38 side of the preform 24. The pressure differential allows atmospheric pressure to force the heated preform into conformance with the shape of the bottom mold 30. When the heated preform 24 comes into substantial conformance with the profile of the mold 30 as illustrated in Figure 7 then the preform 24 is allowed to cool resulting in the desired shaped rigid glass reinforced final composite article 26 as illustrated in Figure 12. The atmospheric pressure compresses the web 20 of the heated preform 24 into a much thinner compressed state so that the final article 26 is thinner than the preform 24. Without the film 22 the air would simply pass through the heated, air permeable web 20, cooling the web 20 and preventing the pressure differential necessary to vacuum form the web 20. The film 22 restricts the air flow through the preform 24 thereby allowing a pressure differential to exist across the preform 24 and thereby allowing the preform 24 to be vacuum thermoformed. A top plan view of the resultant formed article 26 is set forth in Figure 13.

The bottom mold 30 set out in Figures 6, 7, 9 and 11 has a horizontal outer rim 40, a horizontal inner bottom plate 42, and side walls 44 which slope downward and inwardly from the rim 40 to the plate 42. Holes 32 extend through the plate 42 and communicate the chamber 38 with the vacuum tubes 34.

If the heated preform 24 has a degree of stiffness requiring greater pressure to thermoform then can be provided by atmospheric pressure alone then additional pressure can be used to thermoform the preform 24 by using an air pressure forming apparatus 46 as illustrated in Figures 8 and 11. The air pressure forming apparatus 46 has a downwardly concave top mold 48 which forms a pressure chamber 50. The top mold 48 has a horizontal rectangular outer rim 52, a horizontal upper inner plate 54, and sidewalls 56 which extend upwardly and inwardly from the rim 52 to the upper plate 54. The air pressure forming apparatus 46 also includes the bottom mold 30 having the holes 32, and optionally the vacuum tubes 34 and the vacuum pump 36. The pressure apparatus further includes air entry ports 58 in the upper plate 54. The ports 58 are in communication with pressure tubes 60 which are in communication with an air pump 62.

As illustrated in Figure 8, the heated preform 24 can be placed in the air pressure forming apparatus 46 between top mold 48 and the bottom mold 30. The top mold 48 and bottom mold 30 are forced together such that the perimeter of the heated preform 24 is compressed between the rims 40 and 52 such that preform 24 is effectively sealed between the molds 48 and 30 thereby forming the chambers 38, 50. The pressure chamber 50 is formed between the top mold 48 and the heated preform 24. The pump 62 can then force air into the chamber 50 causing substantial air pressure in chamber 50 thereby creating a substantial pressure differential between chamber 50 and chamber 38. Air in chamber 38 can exit through vent holes 32. Vacuum pump 36 can be used to create a vacuum in chamber 38 to further assist forming of the heated preform 24. As illustrated in Figure 11, the pressure differential across the heated preform 24 forces the preform to conform to the shape of the bottom mold 30. The preform is then allowed to cool resulting in the final article 26.

The above apparatus and molds are used to illustrate the present invention. Variations can be made by those skilled in the art without falling outside of the scope of the process of the present invention. The process of the present invention has the advantage of being able to form the webs without the use of either a mechanical male forming plug or a rubber diaphram.

## Claims

1. A process for forming an air permeable fiber reinforced thermoplastic web comprising reinforcing fibers and thermoplastic particulates without the use of a forced male plug or a rubber diaphram, said process comprising:
(a) applying a thermoplastic film to said web to create a preform, said film having an air permeability of less than 0.02 l/m² atm sec.;
(b) heating said preform to a temperature above the melt temperature of said thermoplastic particulates;
(c) creating an air pressure differential across said heated preform sufficient to form said preform into a desired shaped article.

2. The process of claim 1 wherein said fibers have a modulus of elasticity of at least 10,000 mega pascals.

3. The process of claim 2 wherein said web has an air permeability of greater than 0.5 l/m² atm sec.

4. The process of claim 3 wherein said film and web are applied in a substantially planar relationship to create the preform.

5. The process of claim 1 wherein said process is a vacuum forming process.

6. The process of claim 1 wherein said process is pumped a positive air pressure process.

7. The process of claim 1 wherein said process is a combined positive air pressure process/vacuum pressure process.
